# EUROPEAN PATENT SPECIFICATION

(11) **EP 3 240 330 B1**
(45) Date of publication and mention of the grant of the patent: **14.11.2018**
(21) Application number: 16167142.5
(22) Date of filing: 26.04.2016
(51) Int. Cl.: H04W 36/32, H04W 36/02, H04L 29/08, G01C 21/26

(54) **COMMUNICATION SYSTEM OF AUDIO-VIDEO-NAVIGATION DEVICE FOR VEHICLE AND METHOD OF WIRELESS COMMUNICATION FOR THE SAME**
KOMMUNIKATIONSSYSTEM FÜR AUDIO-VIDEO-NAVIGATIONSVORRICHTUNG FÜR EIN FAHRZEUG UND VERFAHREN ZUR DRAHTLOSEN KOMMUNIKATION DAFÜR
SYSTÈME DE COMMUNICATION DE DISPOSITIF DE NAVIGATION AUDIO-VIDÉO POUR VÉHICULE ET PROCÉDÉ DE COMMUNICATION SANS FIL POUR CELUI-CI

(43) Date of publication of application: 01.11.2017
(73) Proprietor: Hyundai Motor Company, Seoul 06797 (KR)
(72) Inventor: CHOI, Hyun Woo, 15866 Gyeonggi-do (KR)
(74) Representative: Isarpatent

(56) References cited:
- EP-A1- 1 704 740
- US-A- 6 167 035
- US-A1- 2013 225 180
- US-A1- 2016 212 675
- AYASKANT RATH ET AL: "Fast handover in cellular networks with femtocells", COMMUNICATIONS (ICC), 2012 IEEE INTERNATIONAL CONFERENCE ON, IEEE, 10 June 2012 (2012-06-10), pages 2752-2757, XP032273518, DOI: 10.1109/ICC.2012.6363687 ISBN: 978-1-4577-2052-9
- MANSOUR M ET AL: "An Indirect Proactive Handoff Scheme Using Location Information", NETWORK-BASED INFORMATION SYSTEMS, 2009. NBIS '09. INTERNATIONAL CONFERENCE ON, IEEE, PISCATAWAY, NJ, USA, 19 August 2009 (2009-08-19), pages 279-285, XP031578044, ISBN: 978-1-4244-4746-6

## Description

### BACKGROUND OF THE DISCLOSURE

### Field of the Disclosure

The present disclosure relates generally to a wireless communication method of a vehicle using a communication network, and more particularly, to a communication system of an audio-video-navigation (AVN) device for a vehicle and a method of wireless communication for the same, for improving communication service quality of a moving vehicle.

### Discussion of the Related Art

Recently, technology for connecting a vehicle to a mobile communication network (e.g., a cellular communication network) has been developed, enabling the vehicle itself to be used as a smart device, as well as a telematics service. According to such technology, known as "connected car technology," information communication technology is associated with a vehicle to enable bidirectional Internet, a mobile service, and so on in the vehicle. For example, a vehicle can be remotely started or remotely turned on from an external source, and a driver can receive information regarding weather, news, and so on in real-time. In addition, the user can use various contents such as an image, music, and so on in real-time and can perform map searching, phone calls, and so on through voice.

In order to support a mobile communication network service, a car with connected car technology installed therein needs handover or handoff technology that reflects mobility of the connected car. Handover or handoff technology refers to a function in which a mobile terminal that is engaged or is transmitting and receiving data is automatically synchronized with a new channel of an adjacent enhanced NodeB (eNB) so as to continuously maintain a transceiving state upon deviating from a cell boundary of a corresponding eNB and moving to a cell boundary of the adjacent eNB.

However, when a mobile terminal is synchronized with the new channel, handover interrupt time occurs (about 15 ms), in which communication with any eNB is interrupted. Additionally, the handover interrupt time accumulates, and delay of a communication service occurs. Accordingly, there exists a need to overcome the communication service delay in order to enhance the quality of connected car technology. European Patent Application EP 1704740 A1 illustrates that a navigation system of a car which shares the route information with a network entity, this is used to provide an estimation of the target cell and also to provide reservation of network resources in a targeted manner.

### SUMMARY OF THE DISCLOSURE

Accordingly, the present disclosure is directed to a communication system for an audio-video-navigation (AVN) device of a vehicle and a wireless communication method thereof that substantially obviates one or more problems due to limitations and disadvantages of the related art.

An object of the present disclosure is to provide a communication system for an AVN device of a vehicle and a wireless communication method thereof, for overcoming a problem in terms of delaying data during handover of a vehicle. The invention is set out in the appended set of claims. The embodiments and/or examples of the following description which are not covered by the appended claims are considered as not being part of the present invention.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a block diagram illustrating an audio-video-navigation (AVN) communication system for a vehicle according to embodiments of the present disclosure;
FIG. 2 is a diagram for explanation of navigation path information (NPI) and position information of an estimated target eNB shown in FIG. 1;
FIGS. 3A to 3C are diagrams for explanation of an operation of an AVN communication system for a vehicle at the point P illustrated in FIG. 2 according to embodiments of the present disclosure;
FIGS. 4A to 4C are diagrams for explanation of an operation of an AVN communication system for a vehicle around the point P illustrated in FIG. 2 according to a Comparative Example of the present disclosure; and
FIG. 5 is a flowchart for explanation of an operation of the vehicle AVN communication system of FIG. 1.

### DETAILED DESCRIPTION OF THE DISCLOSURE

Hereinafter, an audio-video-navigation (AVN) system for a vehicle according to the present disclosure will be described in detail with reference to the accompanying drawings. In addition, the suffixes "module" and "unit" of elements herein are used for convenience of description and thus can be used interchangeably and do not have any distinguishable meanings or functions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g., fuels derived from resources other than petroleum). As referred to herein, a hybrid vehicle is a vehicle that has two or more sources of power, for example both gasoline-powered and electric-powered vehicles.

Additionally, it is understood that an AVN device, as referred to herein, includes a memory and a processor, as would be understood by a person of ordinary skill in the art. The memory is configured to store program instructions, and the processor is specifically programmed to execute the program instructions to perform one or more processes which are described further below.

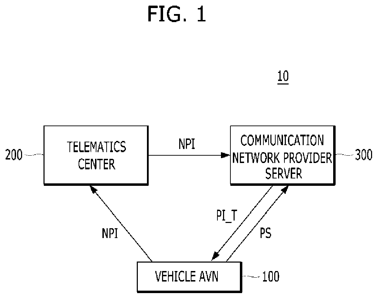

Referring now to the disclosed embodiments, FIG. 1 is a block diagram illustrating an AVN communication system 10 for a vehicle according to embodiments of the present disclosure.

As shown in FIG. 1, the AVN communication system 10 for a vehicle may include an AVN device of the vehicle (alternatively "vehicle AVN" or, simply, "AVN") 100, a telematics center 200, and a communication network provider server 300.

The vehicle AVN 100 may be installed in a vehicle, may control hardware such as a display, a touchscreen, a speaker, and so on according to a driver's request, and execute music, video, or navigation programs. In addition, the vehicle AVN 100 may control a vehicle controller (not shown) to perform an operation of charging, air conditioning, or other vehicle function according to an external remote control request.

The vehicle AVN 100 may be a terminal that pre-joins and is pre-registered with a specific mobile communication network service, and may wirelessly transmit and receive data to and from each of the telematics center 200 and the communication network provider server 300 using a mobile communication network managed by a communication network provider that provides the mobile communication network service. For example, the mobile communication network refers to a communication network for supporting mobile communication standards such as 3rd-generation (3G), long term evolution (LTE), 5G, and so on. That is, the vehicle AVN 100 may allow bidirectional Internet, a mobile service, and so on in a vehicle using connected car technology.

Since a vehicle including the vehicle AVN 100 installed therein moves at high speed, the vehicle AVN 100 supports handover or handoff that reflects mobility. The handover (or the handoff) refers to a function in which the vehicle AVN 100 that is transmitting and receiving data is automatically synchronized with a new channel of an adjacent eNB so as to continuously maintain a transceiving state upon deviating from a cell boundary of a current corresponding eNB and moving to a cell boundary of the adjacent eNB.

In order to prevent data delay during handover, the vehicle AVN 100 may generate navigation path information (NPI) and transmit the NPI to the telematics center 200. The NPI refers to information about a path, which is obtained by inputting a destination to a navigation program of the vehicle AVN 100 by a user and determined to guide movement to the destination from a current position.

The telematics center 200 is a server for providing a telematics service and may collect information required by the user and transmit the information to the vehicle AVN 100 or may transmit information received from the vehicle AVN 100 to the communication network provider server 300 or a corresponding organization (e.g., an insurance company or an emergency medical center).

The telematics center 200 may transmit the NPI received from the vehicle AVN 100 to the communication network provider server 300 identified through unique information of the vehicle AVN 100. The unique information may contain information about a type of a communication network service to which the vehicle AVN 100 transmitting the NPI subscribes and is registered with.

The communication network provider server 300 is a server that manages a mobile network service used by the vehicle AVN 100, and may generate position information PI T of an estimated target eNB as a target eNB to be estimated to be synchronized with the vehicle AVN 100 according to the NPI and transmit the position information PI_T to the vehicle AVN 100.

In a data communication procedure to which handover technology is applied, a base station (or an enhanced NodeB (eNB)) may be classified into a source eNB and a target eNB. The source eNB is an eNB that is currently connected to the vehicle AVN 100 and relays data communication between the communication network provider server 300 and the vehicle AVN 100 and the target eNB is an eNB that is to be connected to the vehicle AVN 100 through a handover procedure.

The vehicle AVN 100 may generate a pre-sending request PS using the position information PI T of the estimated target eNB and current position information of a vehicle including the vehicle AVN 100 installed therein. The pre-sending request PS is a signal that requests pre-downloading of the same data as data being currently downloaded from a source eNB by the vehicle AVN 100.

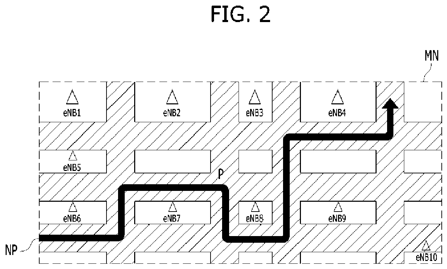

By virtue of a pre-sending operation of the estimated target eNB, data delay may occur during handover. A detailed operation of an AVN communication system 10 for a vehicle associated with the pre-sending request PS will be described with reference to FIGS. 2 to 5.

FIG. 2 is a diagram for explanation of the NPI and the position information PI_T of an estimated target eNB shown in FIG. 1.

FIGS. 1 and 2 illustrate a mini map MN to be displayed on a navigation program of the vehicle AVN 100.

The mini map MN is divided into a road (e.g., a slashed region) through which a vehicle passes and other regions.

Assuming that a navigation path (NP) through which a vehicle is to move is selected by a user, the vehicle AVN 100 generates NPI as information about the NP (e.g., information about a position of a start point, a path on a map, a position of a destination, and so on). The communication network provider server 300 may receive the NPI and generate the position information PI_T of an estimated target eNB as information about eNBs to be selected as a target eNB when the vehicle moves along the NP.

As shown in FIG. 2, eNBs positioned on the mini map MN include a first eNB eNB1 to a tenth eNB eNB10. Although eNBs are indicated on the MN for description of generation of the position information PI_T of the estimated target eNB, eNBs may not be indicated on a navigation program executed by the vehicle AVN 100.

The communication network provider server 300 may sequentially estimate a target eNB as a sixth eNB eNB6 to an eighth eNB eNB8 and the fourth eNB eNB4 using a position of each of the first eNB eNB1 to the tenth eNB eNB10 and the NP. With regard to estimation of the target eNB, the communication network provider server 300 may estimate the target eNB in consideration of a coverage radius of each eNB and a position of each of the first eNB eNB1 to the tenth eNB eNB10.

For example, when the vehicle moves along the NP, if handover between the sixth eNB eNB6 and the fifth eNB eNB5 is not necessary in consideration of a coverage radius of each of the sixth eNB and the seventh eNB eNB7 although a distance between the NP and the fifth eNB eNB5 is relatively short, the fifth eNB eNB5 may not be estimated as an estimated target eNB.

In the end, the communication network provider server 300 may generate position information PI_T of an estimated target eNB, as position information of each of the sixth eNB eNB6 to eighth eNB eNB8 and the fourth eNB eNB4.

Additionally, the communication network provider server 300 may generate the position information PI_T of an estimated target eNB, including position information of eNBs estimated as a next target eNB, based on the NPI and current position information of the vehicle. For example, the position information PI_T of the estimated target eNB, transmitted around a point P, may include position information of each of the eighth eNB eNB8 to the fourth eNB eNB4.

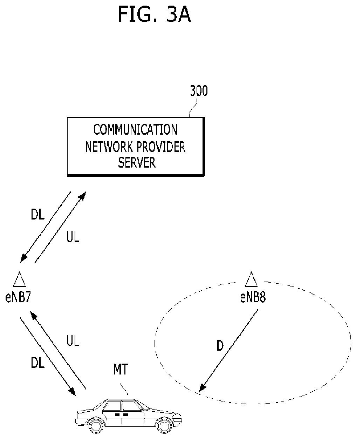

FIGS. 3A to 4C illustrate an operation of an AVN communication system 10 for a vehicle around the point P indicated in FIG. 2, in which a handover problem between the seventh eNB eNB7 and the eighth eNB eNB8 arises.

FIGS. 3A to 3C are diagrams for explanation of an operation of the AVN communication system 10 for a vehicle at the point P illustrated in FIG. 2 according to embodiments of the present disclosure.

Referring to FIGS. 1 to 3C, FIG. 3A illustrates a vehicle MT including the vehicle AVN 100 installed therein, which moves around the point P illustrated in FIG. 2. Assuming the seventh eNB eNB7 is currently a source eNB, the vehicle AVN 100 may transmit and receive download data DL and upload data UL to and from the communication network provider server 300 through the seventh eNB eNB7.

The vehicle AVN 100 may periodically generate a signal level report about whether data is smoothly transmitted and received to and from the seventh eNB eNB7 and transmit the signal level report to the communication network provider server 300.

The communication network provider server 300 may determine whether handover is required, based on the signal level report. That is, upon determining that the vehicle AVN 100 does not smoothly transmit and receive data based on the signal level report, the communication network provider server 300 may transmit a handover command for requesting handover to the vehicle AVN 100.

Upon receiving the handover command, the vehicle AVN 100 may calculate a first distance between the vehicle MT and the eighth eNB eNB8 estimated as the next target eNB based on the position information PI T of the estimated target eNB. Additionally, the position information PI_T of the estimated target eNB may include position information of the fourth eNB eNB4 as well as the eighth eNB eNB8, but the vehicle AVN 100 may apply and store a priority order to each piece of eNB information in order to reduce computational load so as to calculate only the distance between the eighth eNB eNB8 and the vehicle MT.

The vehicle AVN 100 may compare the first distance and a threshold distance D. The threshold distance D is a preset distance according to a coverage radius of the eighth eNB eNB8 as the estimated target eNB. For example, the threshold distance D may be set to be relatively long compared with the eNB coverage radius in consideration of processing time of the pre-sending request PS, but the range of the present disclosure is not limited thereto. Coverage radiuses of the eNBs eNB1 to eNB10 may be the same or different.

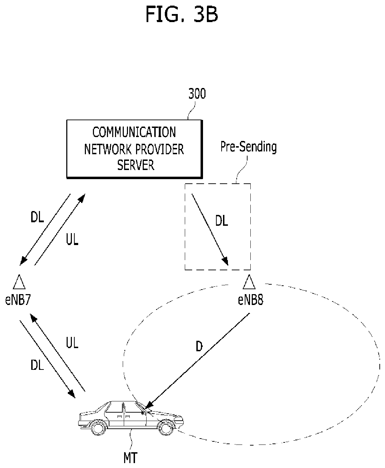

In FIG. 3B, when the vehicle MT is continuously driven such that the first distance is smaller than the threshold distance D according to a comparison result between the first distance and the threshold distance D, the vehicle AVN 100 may transmit the pre-sending request PS to the communication network provider server 300. Furthermore, when the first distance is equal to the threshold distance D, that is, when the first distance is within the threshold distance D, the pre-sending request PS may be generated.

The communication network provider server 300 may perform a pre-sending operation for transmitting data DL being downloaded to the eighth eNB eNB8 as the estimated target eNB through the pre-sending request PS including information about the estimated target eNB and data DL being downloaded.

The vehicle AVN 100 may attempt synchronization with the eighth eNB eNB8 as the estimated target eNB and may test (or signal) whether data can be transmitted and received to and from the eighth eNB eNB8.

Upon completing synchronization with the eighth eNB eNB8 and determining that data can be stably transmitted and received, the vehicle AVN 100 may transmit a confirmation signal to the communication network provider server 300. Upon receiving the confirmation signal, the communication network provider server 300 may change a data path of the vehicle AVN 100 to the eighth eNB eNB8 from the seventh eNB eNB7.

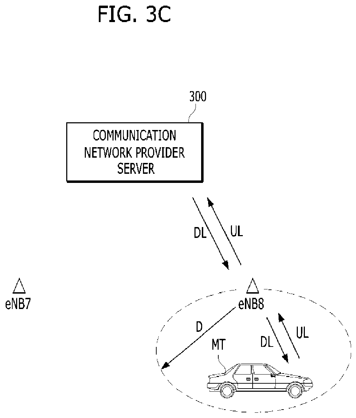

In FIG. 3C, the vehicle MT is continuously driven such that the vehicle AVN 100 transmits and receives data to and from the communication network provider server 300 through the eighth eNB eNB8. In this case, since the eighth eNB eNB8 pre-receives the data DL being downloaded via the pre-sending operation, the vehicle AVN 100 may continuously receive the data DL being downloaded without data delay.

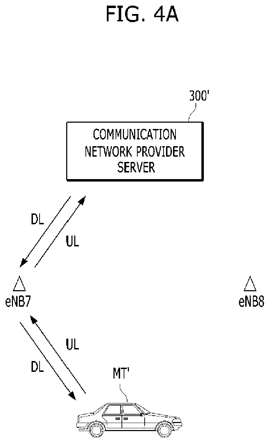

FIGS. 4A to 4C are diagrams for explanation of an operation of an AVN communication system for a vehicle around the point P illustrated in FIG. 2 according to a Comparative Example of the present disclosure.

Referring to FIGS. 1 to 4C, FIG. 4A illustrates a vehicle MT' including a vehicle AVN installed therein, which moves around the point P illustrated in FIG. 2, like in FIG. 3A. In addition, assuming that the seventh eNB eNB7 is currently a source eNB, the vehicle AVN may transmit and receive download data DL and upload data UL to and from a communication network provider server 300' through the seventh eNB eNB7.

The vehicle AVN may periodically generate a signal level report about whether data is smoothly transmitted and received to and from the seventh eNB eNB7 and transmit the signal level report to the communication network provider server 300'.

The communication network provider server 300' may determine whether handover is required, based on the signal level report. That is, upon determining that the vehicle AVN 100 does not smoothly transmit and receive data based on the signal level report, the communication network provider server 300' may transmit a handover command for requesting handover to the vehicle AVN and may be controlled to form a direct tunnel for transmission of the data DL being downloaded to the eighth eNB eNB8 from the seventh eNB eNB7.

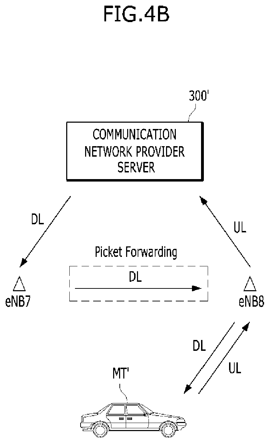

In FIG. 4B, the seventh eNB eNB7 may perform a packet forwarding operation for transmitting the data DL being downloaded to the eighth eNB eNB8 through the direct tunnel formed between the eighth eNB eNB8 and the seventh eNB eNB7.

The vehicle AVN may attempt synchronization with the eighth eNB eNB8 according to the handover command and may test (or signal) whether data can be transmitted and received to and from the eighth eNB eNB8.

Upon completing synchronization with the eighth eNB eNB8 and determining that data can be stably transmitted and received, the vehicle AVN may transmit a confirmation signal to the communication network provider server 300'. Upon receiving the confirmation signal, the communication network provider server 300' may change a data path of the vehicle AVN to the eighth eNB eNB8 from the seventh eNB eNB7.

However, during the packet forwarding operation, handover interrupt time (about 15 ms, for instance) in which the vehicle AVN cannot receive data from any eNB of the seventh eNB eNB7 and the eighth eNB eNB8 may occur. When the handover interrupt time accumulates, the quality of a data communication service is degraded.

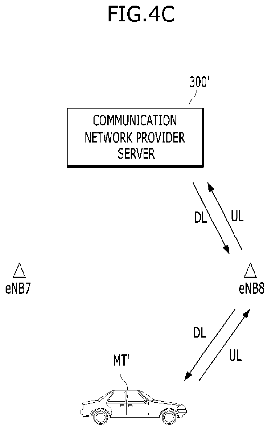

In FIG. 4C, after the vehicle MT is continuously driven and the handover interrupt time elapses, the vehicle AVN may transmit and receive data to and from the communication network provider server 300' through the eighth eNB eNB8.

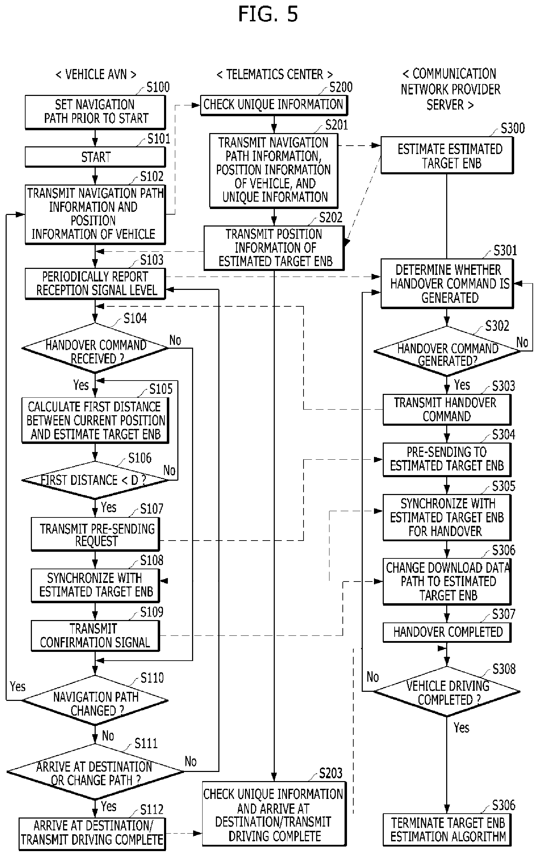

FIG. 5 is a flowchart for explanation of an operation of the vehicle AVN communication system 10 of FIG. 1.

Referring to FIGS. 1 to 5, the vehicle AVN 100 may set a navigation path NP determined according to user selection (S100).

The vehicle MT including the vehicle AVN 100 installed therein may start driving along the NP (S101).

The vehicle AVN 100 may transmit navigation path information NPI about the NP and current position information of the vehicle to the telematics center 200 (S102).

The telematics center 200 checks unique information of the vehicle AVN 100 that transmits the NPI about the NP and the vehicle position information (S200) and transmit the NPI and the vehicle position information to the communication network provider server 300 identified by the unique information (S201).

The communication network provider server 300 may determine the estimated target eNB estimated as the next target eNB based on the NPI and the vehicle position information and transmit the position information PI_T of the estimated target eNB to the telematics center 200 (S300). The telematics center 200 may transmit the position information PI T of the estimated target eNB to the vehicle AVN 100 (S202).

The vehicle AVN 100 may periodically generate signal level report about whether data is smoothly transmitted and received to and from a source eNB and may transmit the signal level report to the communication network provider server 300 (S103).

The communication network provider server 300 may determine whether handover is required and a handover command is to be generated based on the signal level report (S301).

Upon determining that the vehicle AVN 100 cannot smoothly transmit and receive data based on the signal level report (i.e., Yes at S302), the communication network provider server 300 may transmit a handover command for requesting handover to the vehicle AVN 100 (S303).

Upon determining that the vehicle AVN 100 smoothly transmits and receive data to and from the signal level report (i.e., No at S302), the communication network provider server 300 may re-perform operation S301.

Upon receiving the handover command (i.e., Yes at S104), the vehicle AVN 100 may calculate the first distance between the vehicle MT and estimated target eNB from the position information PI_T of the estimated target eNB (S105).

When the vehicle AVN 100 does not receive the handover command (i.e., No at S104), operation S110 to be described below is performed.

The vehicle AVN 100 may compare the first distance and the threshold distance D. According to the comparison result between the first distance and the threshold distance D, when the first distance is smaller than the threshold distance D (i.e., Yes at S106), the vehicle AVN 100 may transmit the pre-sending request PS to the communication network provider server 300 (S107).

According to the comparison result between the first distance and the threshold distance D, when the first distance is not smaller than the threshold distance D (i.e., No at S106), the vehicle AVN 100 may periodically (e.g., every 100 ms) calculate the first distance and may compare the first distance with the threshold distance D (S105).

The communication network provider server 300 may perform a pre-sending operation for transmitting data DL being downloaded to the estimated target eNB through the pre-sending request PS including information about the estimated target eNB and data DL being downloaded (S304).

The vehicle AVN 100 and the estimated target eNB may attempt synchronization with each other and may test (or signal) whether data can be transmitted and received to and from each other (S108 and S305).

Upon completing synchronization with the estimated target eNB and determining that data can be stably transmitted and received, the vehicle AVN 100 may transmit a confirmation signal to the communication network provider server 300 (S109).

Upon receiving the confirmation signal, the communication network provider server 300 may change a data path of the vehicle AVN 100 to the estimated target eNB from the source eNB (S306) and may complete the handover (S307).

When the navigation path NP is changed by a user (i.e., Yes at S110), the vehicle AVN 100 may transmit navigation path information NPI about a new navigation path NP and current position information of the vehicle to the telematics center 200 (S102) and may re-perform subsequent operations.

When the NP is not changed by the user (i.e., No at S110), the vehicle AVN 100 may re-perform operation S103 when the vehicle MT has not arrived at a destination and has not completed driving (i.e., No at S111).

When the vehicle MT arrives at a destination or completes driving (i.e., Yes at S111), the vehicle AVN 100 may transmit destination arrival and driving complete signals to the telematics center 200 (5112).

The telematics center 200 may check unique information of the vehicle AVN 100 that transmits the destination arrival and driving complete signals and transmit the destination arrival and driving complete signals to the communication network provider server 300 identified through the unique information (S203).

When the handover operation is completed and the communication network provider server 300 cannot receive the destination arrival and driving complete signals (i.e., No at S308), operation S301 is re-performed.

When the handover operation is completed and the communication network provider server 300 receives the destination arrival and driving complete signals (Yes of S308), the communication network provider server 300 may terminate a target eNB estimation algorithm, that is, an algorithm for target eNB estimation and data transmission without delay based on an the NPI (S309).

Accordingly, the vehicle AVN communication system 10 according to embodiments of the present disclosure may perform a pre-sending operation on a target eNB based on the NPI such that the vehicle MT that moves rapidly can perform data communication without data delay. The aforementioned vehicle AVN communication system according to the present disclosure may perform a pre-sending operation on a target eNB based on navigation path information such that a rapidly moving vehicle can perform data communication without data delay.

## Claims

1. A wireless communication method for an audio-video-navigation, AVN, device of a vehicle using a mobile communication network, the method comprising:
receiving (S202), by the AVN device, position information of an estimated target base station, which is estimated based on navigation path information;
receiving (S104), by the AVN device, a handover command;
comparing (S105), by the AVN device, the position information of the estimated target base station to position information of the AVN device of the vehicle upon receiving the handover command;
determining (S106), by the AVN device, whether a first distance from the estimated target base station to the AVN device of the vehicle is within a threshold distance;
requesting (S107), by the AVN device, pre-sending with respect to the estimated target base station when the first distance is within the threshold distance;
synchronizing (S108), by the AVN device, with the estimated target base station;
generating, by the AVN device, a confirmation signal in response to the handover command; and
continuously downloading (S109), by the AVN device, from the estimated target base station, data being currently downloaded after a communication network provider server changes a download data path of the AVN device of the vehicle to the estimated target base station upon receiving the confirmation signal,
wherein the pre-sending is that the estimated target base station pre-downloads the data being currently downloaded by the AVN device.

2. The method according to claim 1, further comprising, when a navigation path has changed, receiving position information of the estimated target base station based on the changed navigation path.

3. The method according to claim 1, wherein the threshold distance is preset according to a coverage radius of the estimated target base station.

4. An audio-video-navigation, AVN, communication system for a vehicle using a mobile communication network, the system comprising:
a communication network provider server adapted to i) estimate (S300) position information of an estimated target base station based on navigation path information and ii) generate (S302) a handover command using a signal level report;
an AVN device of the vehicle adapted to i) receive (S202) the position information of an estimated target base station, which is estimated based on navigation path information ii) compare (S105) the position information of the estimated target base station to position information of the AVN device of the vehicle upon receiving the handover command, iii) determine (S106) whether a first distance from the estimated target base station to the AVN device of the vehicle is within a threshold distance, iv) request(S107) pre-sending with respect to the estimated target base station when the first distance is within the threshold distance, v) synchronize (S108) with the estimated target base station, and vi) generate (S109) a confirmation signal in response to the handover command,
wherein the communication network provider server is further adapted to change a download data path of the AVN device of the vehicle to the estimated target base station upon receiving the confirmation signal, and
wherein the AVN device is further adapted to continuously download, from the estimated target base station, data being currently downloaded and wherein the pre-sending is that the estimated target base station pre-downloads the data being currently downloaded by the AVN device.

5. The system according to claim 4, wherein the communication network provider server is further adapted to perform pre-sending on the estimated target base station corresponding to the request.

6. The system according to claim 4, further comprising a telematics center adapted to identify the communication network provider server corresponding to the AVN device of the vehicle using unique information of the AVN device of the vehicle and adapted to transmit the navigation path information and the unique information to the communication network provider server.

7. The system according to claim 4, wherein, when a navigation path is changed, the AVN device of the vehicle is further adapted to receive position information of an estimated target base station estimated based on the changed navigation path.

8. The system according to claim 4, wherein the threshold distance is preset according to a coverage radius of the estimated target base station.

9. A wireless communication method for an audio-video-navigation, AVN, device of a vehicle using a mobile communication network, the method comprising:
estimating (S300), by a communication network provider server, position information of an estimated target base station based on navigation path information of the AVN device of the vehicle;
generating (S302), by the communication network provider server, a handover command using a signal level report of the AVN device of the vehicle;
comparing (S105), by the AVN device of the vehicle, the position information of the estimated target base station to position information of the AVN device of the vehicle upon receiving the handover command;
determining (S106), by the AVN device of the vehicle, whether a first distance from the estimated target base station to the AVN device of the vehicle is within a threshold distance; requesting (S107), by the AVN device of the vehicle, pre-sending with respect to the estimated target base station when the first distance is within the threshold distance;
synchronizing (S108), by the AVN device of the vehicle, with the estimated target base station;
generating (S109), by the AVN device of the vehicle, a confirmation signal in response to the handover command;
changing (S306), by the communication network provider server, a download data path of the AVN device of the vehicle to the estimated target base station upon receiving the confirmation signal; and
continuously downloading, by the AVN device of the vehicle, from the estimated target base station, data being currently downloaded,
wherein the pre-sending is that the estimated target base station pre-downloads the data being currently downloaded by the AVN device.

## Patentansprüche

1. Drahtloskommunikationsverfahren für eine Audio-Video-Navigations (AVN)-Vorrichtung eines Fahrzeugs, die ein Mobilkommunikationsnetz verwendet, wobei das Verfahren Folgendes umfasst:
Empfangen (S202), durch die AVN-Vorrichtung, von Positionsinformationen einer geschätzten Ziel-Basisstation, die anhand von Navigationspfadinformationen geschätzt wird;
Empfangen (S104), durch die AVN-Vorrichtung, eines Übergabebefehls;
Vergleichen (S105), durch die AVN-Vorrichtung, der Positionsinformationen der geschätzten Ziel-Basisstation mit Positionsinformationen der AVN-Vorrichtung des Fahrzeugs bei Empfang des Übergabebefehls;
Bestimmen (S106), durch die AVN-Vorrichtung, ob eine erste Distanz von der geschätzten Ziel-Basisstation zu der AVN-Vorrichtung des Fahrzeugs innerhalb einer Schwellendistanz liegt;
Anfordern (S107), durch die AVN-Vorrichtung, eines Vorab-Sendens mit Bezug auf die geschätzte Ziel-Basisstation, wenn die erste Distanz innerhalb der Schwellendistanz liegt;
Synchronisieren (S108), durch die AVN-Vorrichtung, mit der geschätzten Ziel-Basisstation;
Generieren, durch die AVN-Vorrichtung, eines Bestätigungssignals in Reaktion auf den Übergabebefehl; und
kontinuierliches Herunterladen (S109), durch die AVN-Vorrichtung, von der geschätzten Ziel-Basisstation, von Daten, die gerade heruntergeladen werden, nachdem ein Kommunikationsnetzanbieter-Server einen Downloaddatenpfad der AVN-Vorrichtung des Fahrzeugs zu der geschätzten Ziel-Basisstation bei Empfang des Bestätigungssignals geändert hat,
wobei das Vorab-Senden darin besteht, dass die geschätzte Ziel-Basisstation vorab die Daten herunterlädt, die gerade durch die AVN-Vorrichtung heruntergeladen werden.

2. Verfahren nach Anspruch 1, das des Weiteren umfasst, wenn sich ein Navigationspfad geändert hat, Positionsinformationen der geschätzten Ziel-Basisstation auf der Basis des geänderten Navigationspfades zu empfangen.

3. Verfahren nach Anspruch 1, wobei die Schwellendistanz gemäß einem Versorgungsradius der geschätzten Ziel-Basisstation voreingestellt wird.

4. Audio-Video-Navigations (AVN)-Kommunikationssystem für ein Fahrzeug, das ein Mobilkommunikationsnetz verwendet, wobei das System Folgendes umfasst:
einen Kommunikationsnetzanbieter-Server, der dafür eingerichtet ist, i) Positionsinformationen einer geschätzten Ziel-Basisstation anhand von Navigationspfadinformationen zu schätzen (S300), und ii) einen Übergabebefehl unter Verwendung eines Signalpegelberichts zu generieren (S302);
eine AVN-Vorrichtung des Fahrzeugs, die dafür eingerichtet ist, i) die Positionsinformationen einer geschätzten Ziel-Basisstation zu empfangen (S202), die anhand von Navigationspfadinformationen geschätzt wird, ii) die Positionsinformationen der geschätzten Ziel-Basisstation mit Positionsinformationen der AVN-Vorrichtung des Fahrzeugs bei Empfang des Übergabebefehls zu vergleichen (S105), iii) zu bestimmen (S106), ob eine erste Distanz von der geschätzten Ziel-Basisstation zu der AVN-Vorrichtung des Fahrzeugs innerhalb einer Schwellendistanz liegt, iv) ein Vorab-Senden mit Bezug auf die geschätzte Ziel-Basisstation anzufordern (S107),
wenn die erste Distanz innerhalb der Schwellendistanz liegt, v) sich mit der geschätzten Ziel-Basisstation zu synchronisieren (S108), und vi) ein Bestätigungssignal in Reaktion auf den Übergabebefehl zu generieren (S109),
wobei der Kommunikationsnetzanbieter-Server des Weiteren dafür eingerichtet ist, einen Downloaddatenpfad der AVN-Vorrichtung des Fahrzeugs zu der geschätzten Ziel-Basisstation bei Empfang des Bestätigungssignals zu ändern, und
wobei die AVN-Vorrichtung des Weiteren dafür eingerichtet ist, von der geschätzten Ziel-Basisstation kontinuierlich Daten herunterzuladen, die momentan heruntergeladen werden, und wobei das Vorab-Senden darin besteht, dass die geschätzte Ziel-Basisstation vorab die Daten herunterlädt, die momentan durch die AVN-Vorrichtung heruntergeladen werden.

5. System nach Anspruch 4, wobei der Kommunikationsnetzanbieter-Server des Weiteren dafür ausgelegt ist, ein Vorab-Senden in der geschätzten Ziel-Basisstation entsprechend der Anforderung auszuführen.

6. System nach Anspruch 4, das des Weiteren ein Telematik-Zentrum umfasst, das dafür eingerichtet ist, den Kommunikationsnetzanbieter-Server, der der AVN-Vorrichtung des Fahrzeugs entspricht, unter Verwendung eindeutiger Informationen der AVN-Vorrichtung des Fahrzeugs zu identifizieren, und dafür eingerichtet ist, die Navigationspfadinformationen und die eindeutigen Informationen an den Kommunikationsnetzanbieter-Server zu senden.

7. System nach Anspruch 4, wobei, wenn ein Navigationspfad geändert wird, die AVN-Vorrichtung des Fahrzeugs des Weiteren dafür eingerichtet ist, Positionsinformationen einer geschätzten Ziel-Basisstation zu empfangen, die auf der Basis des geänderten Navigationspfades geschätzt wird.

8. System nach Anspruch 4, wobei die Schwellendistanz gemäß einem Versorgungsradius der geschätzten Ziel-Basisstation voreingestellt wird.

9. Drahtloskommunikationsverfahren für eine Audio-Video-Navigations (AVN)-Vorrichtung eines Fahrzeugs, die ein Mobilkommunikationsnetz verwendet, wobei das Verfahren Folgendes umfasst:
Schätzen (S300), durch einen Kommunikationsnetzanbieter-Server, von Positionsinformationen einer geschätzten Ziel-Basisstation anhand von Navigationspfadinformationen der AVN-Vorrichtung des Fahrzeugs,
Generieren (S302), durch den Kommunikationsnetzanbieter-Server, eines Übergabebefehls unter Verwendung eines Signalpegelberichts der AVN-Vorrichtung des Fahrzeugs;
Vergleichen (S105), durch die AVN-Vorrichtung des Fahrzeugs, der Positionsinformationen der geschätzten Ziel-Basisstation mit Positionsinformationen der AVN-Vorrichtung des Fahrzeugs bei Empfang des Übergabebefehls;
Bestimmen (S106), durch die AVN-Vorrichtung des Fahrzeugs, ob eine erste Distanz von der geschätzten Ziel-Basisstation zu der AVN-Vorrichtung des Fahrzeugs innerhalb einer Schwellendistanz liegt;
Anfordern (S107), durch die AVN-Vorrichtung des Fahrzeugs, eines Vorab-Sendens mit Bezug auf die geschätzte Ziel-Basisstation, wenn die erste Distanz innerhalb der Schwellendistanz liegt;
Synchronisieren (S108), durch die AVN-Vorrichtung des Fahrzeugs, mit der geschätzten Ziel-Basisstation,
Generieren (S109), durch die AVN-Vorrichtung des Fahrzeugs, eines Bestätigungssignals in Reaktion auf den Übergabebefehl;
Ändern (S306), durch den Kommunikationsnetzanbieter-Server, eines Downloaddatenpfades der AVN-Vorrichtung des Fahrzeugs zu der geschätzten Ziel-Basisstation bei Empfang des Bestätigungssignals; und
kontinuierliches Herunterladen, durch die AVN-Vorrichtung des Fahrzeugs, von der geschätzten Ziel-Basisstation, von Daten, die momentan heruntergeladen werden, wobei das Vorab-Senden darin besteht, dass die geschätzte Ziel-Basisstation vorab die Daten herunterlädt, die gerade durch die AVN-Vorrichtung heruntergeladen werden.

## Revendications

1. Procédé de communication sans fil pour un dispositif de navigation audio-vidéo, AVN, d'un véhicule utilisant un réseau de communication mobile, le procédé comprenant les étapes consistant à :
recevoir (S202), par le dispositif AVN, des informations de position d'une station de base cible estimée, qui sont estimées sur la base d'informations de chemin de navigation ;
recevoir (S104), par le dispositif AVN, une commande de transfert ;
comparer (S105), par le dispositif AVN, les informations de position de la station de base cible estimée avec des informations de position du dispositif AVN du véhicule à la réception de la commande de transfert ;
déterminer (S106), par le dispositif AVN, si une première distance entre la station de base cible estimée et le dispositif AVN du véhicule est inférieure ou égale à une distance seuil ;
demander (S107), par le dispositif AVN, un préenvoi par rapport à la station de base cible estimée lorsque la première distance est inférieure ou égale la distance seuil ;
se synchroniser (S108), par le dispositif AVN, avec la station de base cible estimée ;
générer, par le dispositif AVN, un signal de confirmation en réponse à la commande de transfert ; et
télécharger en continu (S109), par le dispositif AVN, à partir de la station de base cible estimée, des données en cours de téléchargement après qu'un serveur de fournisseur de réseau de communication a changé un chemin de données de téléchargement du dispositif AVN du véhicule vers la station de base cible estimée à la réception du signal de confirmation,
le préenvoi consistant en ce que la station de base cible estimée prétélécharge les données en cours de téléchargement par le dispositif AVN.

2. Procédé selon la revendication 1, comprenant en outre l'étape consistant, lorsqu'un chemin de navigation a changé, à recevoir des informations de position de la station de base cible estimée sur la base du chemin de navigation qui a changé.

3. Procédé selon la revendication 1, dans lequel la distance seuil est prédéfinie en fonction d'un rayon de couverture de la station de base cible estimée.

4. Système de communication de navigation audio-vidéo, AVN, pour un véhicule utilisant un réseau de communication mobile, le système comprenant :
un serveur de fournisseur de réseau de communication adapté à i) estimer (S300) des informations de position d'une station de base cible estimée sur la base d'informations de chemin de navigation et ii) générer (S302) une commande de transfert en utilisant un rapport de niveau de signal ;
un dispositif AVN du véhicule adapté à i) recevoir (S202) les informations de position d'une station de base cible estimée, qui sont estimées sur la base des informations de chemin de navigation, ii) comparer (S105) les informations de position de la station de base cible estimée avec des informations de position du dispositif AVN du véhicule à la réception de la commande de transfert, iii) déterminer (S106) si une première distance entre la station de base cible estimée et le dispositif AVN du véhicule est inférieure ou égale à une distance seuil, iv) demander (S107) le préenvoi par rapport à la station de base cible estimée lorsque la première distance est inférieure ou égale à la distance seuil, v) se synchroniser (S108) avec la station de base cible estimée, et vi) générer (S109) un signal de confirmation en réponse à la commande de transfert,
le serveur de fournisseur de réseau de communication étant en outre adapté à changer un chemin de données de téléchargement du dispositif AVN du véhicule vers la station de base cible estimée à la réception du signal de confirmation, et
le dispositif AVN étant en outre adapté à télécharger en continu, à partir de la station de base cible estimée, des données en cours de téléchargement, et
le préenvoi consistant en ce que la station de base cible estimée prétélécharge les données en cours de téléchargement par le dispositif AVN.

5. Système selon la revendication 4, dans lequel le serveur de fournisseur de réseau de communication est en outre adapté à effectuer un préenvoi sur la station de base cible estimée correspondant à la demande.

6. Système selon la revendication 4, comprenant en outre un centre télématique adapté à identifier le serveur de fournisseur de réseau de communication correspondant au dispositif AVN du véhicule en utilisant des informations uniques du dispositif AVN du véhicule et adapté à transmettre les informations de chemin de navigation et les informations uniques au serveur de fournisseur de réseau de communication.

7. Système selon la revendication 4, dans lequel, lorsqu'un chemin de navigation est changé, le dispositif AVN du véhicule est en outre adapté à recevoir des informations de position d'une station de base cible estimée sur la base du chemin de navigation qui a changé.

8. Système selon la revendication 4, dans lequel la distance seuil est prédéfinie en fonction d'un rayon de couverture de la station de base cible estimée.

9. Procédé de communication sans fil pour un dispositif de navigation audio-vidéo, AVN, d'un véhicule utilisant un réseau de communication mobile, le procédé comprenant les étapes consistant à :
estimer (S300), par un serveur de fournisseur de réseau de communication, des informations de position d'une station de base cible estimée sur la base d'informations de chemin de navigation du dispositif AVN du véhicule ;
générer (S302), par le serveur de fournisseur de réseau de communication, une commande de transfert en utilisant un rapport de niveau de signal du dispositif AVN du véhicule ;
comparer (S105), par le dispositif AVN du véhicule, les informations de position de la station de base cible estimée avec des informations de position du dispositif AVN du véhicule à la réception de la commande de transfert ;
déterminer (S106), par le dispositif AVN du véhicule, si une première distance entre la station de base cible estimée et le dispositif AVN du véhicule est inférieure ou égale à une distance seuil ;
demander (S107), par le dispositif AVN du véhicule, un préenvoi par rapport à la station de base cible estimée lorsque la première distance est inférieure ou égale à la distance seuil ;
se synchroniser (S108), par le dispositif AVN du véhicule, avec la station de base cible estimée ;
générer (S109), par le dispositif AVN du véhicule, un signal de confirmation en réponse à la commande de transfert ;
changer (S306), par le serveur de fournisseur de réseau de communication, un chemin de données de téléchargement du dispositif AVN du véhicule vers la station de base cible estimée à la réception du signal de confirmation ; et
télécharger en continu, par le dispositif AVN du véhicule, à partir de la station de base cible estimée, les données en cours de téléchargement,
le préenvoi consistant en ce que la station de base cible estimée prétélécharge les données en cours de téléchargement par le dispositif AVN.
